# EUROPEAN PATENT SPECIFICATION

(11) **EP 2 094 046 B1**
(45) Date of publication and mention of the grant of the patent: **08.12.2010**
(21) Application number: 09002638.6
(22) Date of filing: 25.02.2009
(51) Int. Cl.: H04W 72/04

(54) **Selection of E-AGCH channelization code in a HSUPA mobile communication system**
Auswahl eines E-AGCH Kanalisierkodes in einem mobilen HSUPA Kommunikationssystem
Sélection d'un code de canal E-AGCH dans un système de communication mobile HSUPA

(30) Priority: 25.02.2008 JP 2008043540; 21.04.2008 JP 2008110735
(43) Date of publication of application: 26.08.2009
(73) Proprietor: NTT DoCoMo, Inc., Chiyoda-ku Tokyo 100-6150 (JP)
(72) Inventor: Hanaki, Akihito, Tokyo 100-6150 (JP); Fujiwara, Akihiro, Tokyo 100-6150 (JP); Hayashi, Takahiro, Tokyo 100-6150 (JP); Goto, Yoshikazu, Tokyo 100-6150 (JP); Takagi, Yukiko, Tokyo 100-6150 (JP); Kawamoto, Junichiro, Tokyo 100-6150 (JP)
(74) Representative: HOFFMANN EITLE

(56) References cited:
- EP-A- 1 655 909
- EP-A- 1 755 290
- US-A1- 2007 133 458
- "Universal Mobile Telecommunications System (UMTS); UTRAN Iub interface Node B Application Part (NBAP) signalling (3GPP TS 25.433 version 6.15.0 Release 6); ETSI TS 125 433" ETSI STANDARDS, LIS, SOPHIA ANTIPOLIS CEDEX, FRANCE, vol. 3-R3, no. V6.15.0, 1 October 2007 (2007-10-01), XP014040055 ISSN: 0000-0001

## Description

### BACKGROUND OF THE INVENTION

### 1. Field of the Invention

The present invention relates to a mobile communication method, a mobile communication system, and a radio base station, in which a mobile station transmits uplink user data by using a transmission rate notified by a radio base station via a transmission rate control channel.

### 2. Description of the Related Art

In a mobile communication system adopting Enhanced Uplink (EUL)/High Speed Uplink Packet Access (HSUPA) defined in 3GPP, a mobile station UE is configured to transmit uplink user data by using a transmission rate notified by a radio base station NodeB via a transmission rate control channel (E-AGCH: E-DCH Absolute Grant Channel)(see 3GPP TS25.433 V6.15.0).

However, 3GPP does not define a method by which E-AGCH channelization code (hereinafter, referred to as E-AGCH CC) is assigned to the mobile station UE.

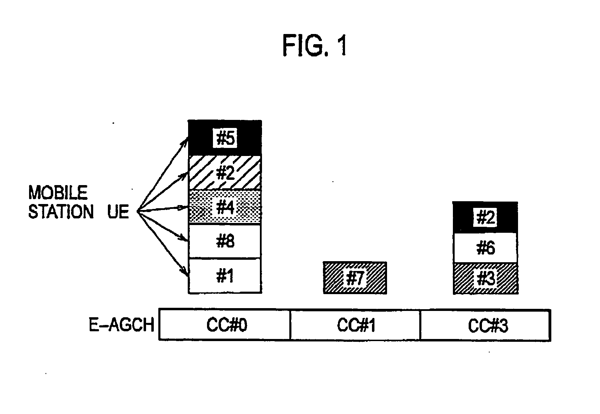

Accordingly, as shown in FIG. 1, when only a specific E-AGCH CC (in an example of FIG. 1, an E-AGCH CC#D) is assigned to a number of mobile stations UE (in an example of FIG. 1, mobile stations UE #1, #8, #4, #2, #5), there are problems that a radio base Station NodeB is not capable of transmitting via an E-AGCH using the specific E-AGCH CC to a mobile station UE which desires the E-AGCH using the specific E-AGCH CC, and ununiformity occurs in transmission frequencies in each of the E-AGCHs.

### SUMMARY OF THE INVENTION

The object is achieved by the subject-matter of the independent claims. Advantageous embodiments are defined in the dependent claims. Further examples are provided for facilitating the understanding of the invention.

A first aspect of the present invention is summarized as a mobile communication method by which a mobile station transmits uplink user data by using a transmission rate notified by a radio base station via a transmission rate control channel. The mobile communication method includes: (A) causing a radio network controller to specify a plurality of transmission rate control channel channelization codes assignable to the mobile station, for the radio base station; (B) causing the radio base station to select a transmission rate control channel channelization code assigned to a lowest number of mobile stations, upon receipt of a communication start request from the mobile station, from among the plurality of transmission rate control channel channelization codes specified in the (A); (C) causing the radio base station to assign the transmission rate control channel channelization code selected in the (B) to the mobile station; and (D) causing the mobile Station to transmit the uplink user data by using the transmission rate notified via the transmission rate control channel corresponding to the transmission rate control channel channelization code assigned in the (C). A second aspect of the present invention is summarized as a mobile communication system in which a mobile station is configured to transmit uplink user data by using a transmission rate notified by a radio base station via a transmission rate control channel. The mobile communication system includes: a radio network controller configured to specify a plurality of transmission rate control channel channelization codes assignable to the mobile station, for the radio base station. The radio base station is configured to select a transmission rate control channel channelization code assigned to a lowest number of mobile stations, upon receipt of a communication start request from the mobile station, from among the plurality of transmission rate control channel channelization codes specified by the radio network controller, and then to assign a selected transmission rate control channel channelization code to the mobile station. The mobile station is configured to transmit the uplink user data by using the transmission rate notified via the transmission rate control channel corresponding to the selected transmission rate control channel channelization code assigned by the radio base station.

In the second aspect of the present invention, the radio base station is configured to select the transmission rate control channel channelization code assigned to the fewest mobile stations, from transmission rate control channel channelization codes corresponding to a group identifier of the mobile station, among the plurality of transmission rate control channel channelization codes specified by the radio network controller.

In the second aspect of the present invention, when a plurality of the transmission rate control channel channelization codes are selected, the radio base station assigns a transmission rate control channel channelization code having a smallest identification number in a plurality of selected transmission rate control channel channelization codes to the mobile station.

A third aspect of the present invention is summarized as a radio base station used in a mobile communication system in which a mobile station transmits uplink user data by using a transmission rate notified by the radio base station via a transmission rate control channel. The radio base station includes: an assignment unit configured to select a transmission rate control channel channelization code assigned to a lowest number of mobile stations, upon receipt of a communication start request from the mobile station, from among a plurality of transmission rate control channel channelization codes specified by a radio network controller, and then to assign a selected transmission rate control channel channelization code to the mobile station.

In the third aspect of the present invention, the assignment unit selects the transmission rate control channel channelization code assigned to the lowest number of mobile stations, from transmission rate control channel channelization codes corresponding to a group identifier of the mobile station, among the plurality of transmission rate control channel channelization codes specified by the radio network controller.

In the third aspect of the present invention, when a plurality of the transmission rate control channel channelization codes are selected, the assignment unit assigns a transmission rate control channel channelization code having a smallest identification number in a plurality of selected transmission rate control channel channelization codes, to the mobile station.

In the first aspect of the present invention, in the B, the radio base station selects the transmission rate control channel channelization code assigned to the lowest number of mobile stations in a unit time, upon receipt of the communication start request from the mobile station, from among the plurality of transmission rate control channel channelization codes specified in the A.

In the second aspect of the present invention, the radio base station selects the transmission rate control channel channelization code assigned to the lowest number of mobile stations in a unit time, upon receipt of the communication start request from the mobile station, from among the plurality of transmission rate control channel channelization codes specified by the radio network controller, and then assigns the selected transmission rate control channel channelization code to the mobile station.

In the third aspect of the present invention, the assignment unit selects the transmission rate control channel channelization code assigned to the lowest number of mobile stations in a unit time, upon receipt of the communication start request from the mobile station, from among the plurality of transmission rate control channel channelization codes specified by the radio network controller, and then assigns the selected transmission rate control channel channelization code to the mobile station.

### BRIEF DESCRIPTION OF THE DRAWINGS

FIG. 1 is a view for explaining problems in a conventional mobile communication system.
FIG. 2 is an overall block diagram of a mobile communication system according to a first embodiment of the present invention.
FIG. 3 is a functional block diagram of a radio base station according to the first embodiment of the present invention.
FIG. 4 is a view for explaining an assignment method of an E-AGCH CC in the mobile communication system according to the first embodiment of the present invention.
FIG 5 is a functional block diagram of a radio network controller according to the first embodiment of the present invention;
FIG. 6 is a flowchart showing overall operation of the mobile communication system according to the first embodiment of the present invention.
FIG. 7 is a flowchart showing operation in which a radio base station assigns an E-AGCH CC to a mobile station UE in the mobile communication system according to the first embodiment of the present invention.
FIG. 8 is a view for explaining an assignment method of an E-AGCH CC in a mobile communication system according to a second embodiment of the present invention.
FIG. 9 is a flowchart showing operation in which a radio base station assigns an E-AGCH CC to a mobile station UE in the mobile communication system according to the second embodiment of the present invention.
FIG. 10 is a view for explaining an assignment method of an E-AGCH CC in a mobile communication system according to a modification 1 of the present invention.
FIG 11 is a view for explaining the assignment method of an E-AGCH CC in the mobile communication system according to the modification 1 of the present invention.
FIG. 12 is a flowchart showing operation in which a radio base station assigns an E-AGCH CC to a mobile station UE in the mobile communication system according to the modification 1 of the present invention.
FIG 13 is a flowchart showing operation in which a radio base station assigns an E-AGCH CC to a mobile station UE in the mobile communication system of the modification 1 of the present invention.

### DETAILED DESCRIPTION OF THE EMBODIMENTS

### (Configuration of a Mobile Communication System according to a First Embodiment of the Present Invention)

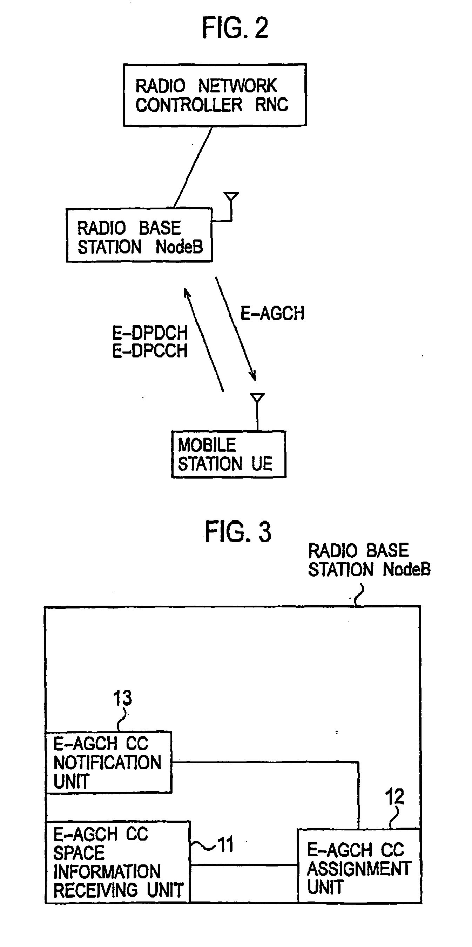

A configuration of a mobile communication system according to a first embodiment of the present invention is described with reference to FIGs. 2 to 5.

In the description of this embodiment, an example is given of a mobile communication system adopting an EUL/HSUPA scheme defined in above-mentioned 3GPP. However, the present invention is not limited to the example.

As shown in FIG. 2, the mobile communication system according to this embodiment includes a radio network controller RNC, a radio base station NodeB, and a mobile station UE.

As shown in FIG. 3, the radio base station NodeB includes an E-AGCH CC space information receiving unit 11, an E-AGCH CC assignment unit 12, and an E-AGCH CC notification unit 13.

The E-AGCH CC space information receiving unit 11 is configured to receive E-AGCH CC space information indicating a plurality of E-AGCH CCs specified by the radio network controller RNC.

Upon receipt of an EUL communication start request (a communication start request) from the mobile station UE, the E-AGCH CC assignment unit 12 is configured to select an E-AGCH CC assigned to a fewest mobile stations, from among a plurality of the E-AGCH CCs indicated in E-AGCH CC space information received by the E-AGCH CC space information receiving unit 11, and then to assign the thus selected E-AGCH CC to the mobile station UE.

When selecting a plurality of the E-AGCH CCs, the E-AGCH CC assignment unit 12 may be configured to assign an E-AGCH CC having the smallest identification number in the thus selected E-AGCH CCs, to the mobile station UE.

Further, the E-AGCH CC assignment unit 12 may also be configured to repeatedly assign the E-AGCH CCs in ascending order of the identification number of the E-AGCH CCs to each mobile station UE transmitting the EUL communication start request

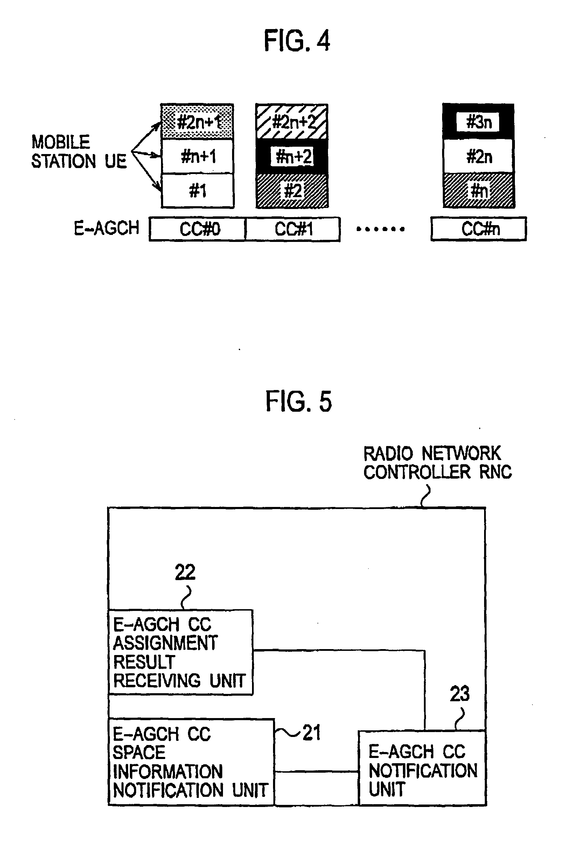

In an example of FIG. 4, the E-AGCH CC assignment unit 12 may be configured to assign the E-AGCH CCs to each one of mobile stations UE #1, #2,..., and #3n, transmitting an EUL communication start request, in the order of CC#0, CC#1, ...→CC#n, CC#0, ....

As described above, the E-AGCH CC assignment unit 12 is configured to control the assignment of the plurality of E-AGCH CCs to mobile stations UE so that the number of mobile stations becomes uniform, to which each E-AGCH CC specified by the radio network controller RNC is assigned.

The E-AGCH CC notification unit 13 is configured to notify the radio network controller RNC of the E-AGCH CC assigned to the mobile station UE which has transmitted the EUL communication start request.

More specifically, the E-AGCH CC notification unit 13 is configured to notify the radio network controller RNC of the E-AGCH CC by using NBAP signaling and others.

As shown in FIG. 5, the radio network controller RNC includes an E-AGCH CC space information notification unit 21, an E-AGCH CC assignment result receiving unit 22, and an E-AGCH CC notification unit 23.

The E-AGCH CC space information notification unit 21 is configured to specify a plurality of E-AGCH CCs assignable to mobile stations UE, to the radio base station NodeB.

The E-AGCH CC assignment result receiving unit 22 is configured to receive, from the radio base station NodeB, a result of the assignment of the E-AGCH CC to the mobile station UE having transmitted the EUL communication start request.

The E-AGCH CC notification unit 23 is configured to notify the mobile station UE having transmitted the EUL communication start request of the E-AGCH CC assigned to the mobile station UE.

More specifically, the E-AGCH CC notification unit 23 is configured to notify the mobile station UE of the E-AGCH CC by using RRC signaling and others.

Further, the mobile station UE is configured to transmit uplink user data by using a transmission rate notified via the E-AGCH corresponding to the E-AGCH CC assigned (notified by the E-AGCH CC notification unit 23 of the radio network controller RNC) by the radio base station NodeB.

To be more specific, the mobile station UE is configured to manage an index identifying an AG, and a transport block by associating the index with the transport block, and to transmit uplink user data at a transport block size corresponding to an Absolute Grant (AG) notified via the E-AGCH.

Further, the mobile station UE is configured to manage an index identifying an AG and a transmission power ratio between an E-DCH Dedicated Physical Data Channel (E-DPDCH) and a Dedicated Physical Control Channel (DPCCH) by associating the index with the transmission power ratio, and to transmit uplink user data by use of the transmission power ratio corresponding to an AG notified via the E-AGCH.

### (Operation of the Mobile Communication System according to the First Embodiment of the Present Invention)

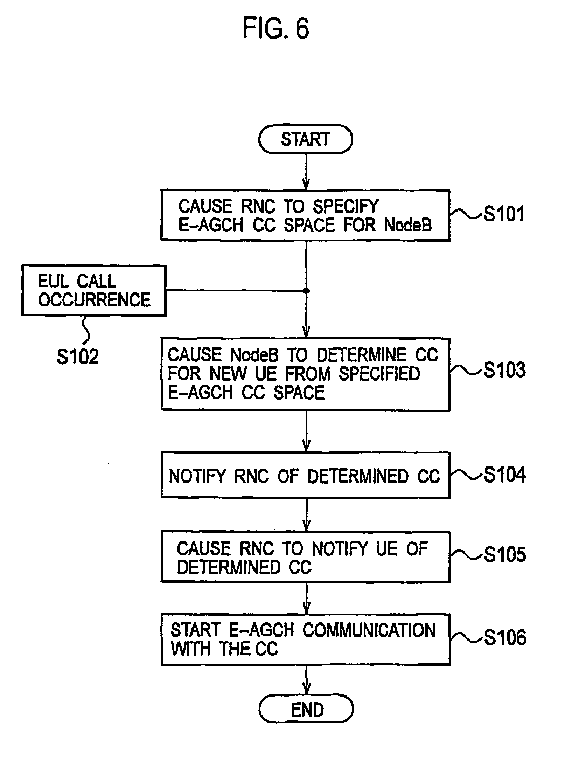

Operation of the mobile communication system according to this embodiment of the present invention is described with reference to FIGs. 6 and 6. First, overall operation of the mobile communication system according to this embodiment is described with reference to FIG. 6.

As shown in FIG. 6, in Step S101, the radio network controller RNC specifies a plurality of E-AGCH CCs (E-AGCH CC space) assignable to mobile stations UE, for the radio base station NodeB.

In Step S102, once a new mobile station UE transmits an EUL communication start request to the radio base station NodeB, the radio base station NodeB determines an E-AGCH CC to be assigned to the new mobile station UE from among the plurality of E-AGCH CCs (E-AGCH CC space) specified by the radio network controller RNC, in Step S103.

In Step S104, the radio base station NodeB notifies the radio network controller RNC of the E-AGCH CC assigned to the new mobile station UE.

In Step S105, the radio network controller RNC notifies the new mobile station UE of the E-AGCH CC.

In Step S106, the radio base station NodeB notifies the new mobile station UE of a transmission rate via an E-AGCH corresponding to the E-AGCH CC, and the new mobile station UE transmits uplink user data at the transmission rate.

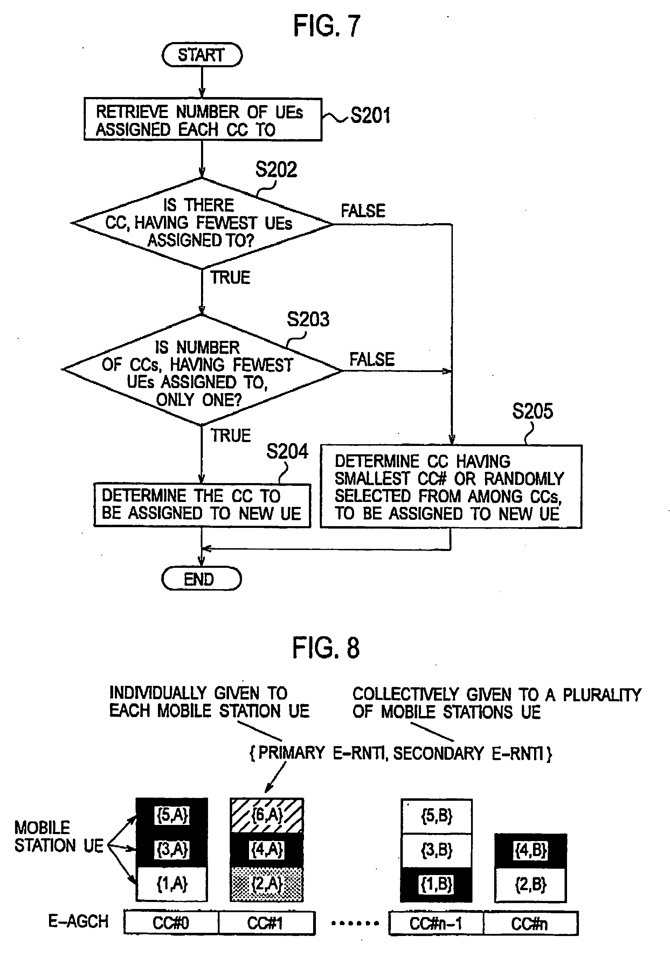

Here, with reference to FIG. 7, description is given of a method of determining an E-AGCH CC to be assigned to the new mobile station UE in Step S103.

As shown in FIG. 7, in Step S201, the radio base station NodeB retrieves the number of mobile stations UE to which each of a plurality of E-AGCH CCs specified by the radio network controller RNC is assigned.

In Step S202, the radio base station NodeB determines whether or not an E-AGCH CC assigned to a fewest mobile stations is present.

When it is determined that the E-AGCH CC is present, the radio base station NodeB determines whether or not the number of such E-AGCH CCs is one, in Step S203.

When it is determined that the number of such E-AGCH CCs is one, the radio base station NodeB determines the E-AGCH CC as an E-AGCH CC to be assigned to the new mobile station UE, in Step S204.

Meanwhile, in Step S202, when it is determined that the E-AGCH CC assigned to the fewest mobile stations is not present, in Step S205, the radio base station NodeB determines, an E-AGCH CC having the smallest identification number, or an E-AGCH CC randomly selected as an E-AGCH CC to be assigned to the new mobile station UE, from among the plurality of E-AGCH CCs specified by the radio network controller RNC.

Further, in Step S203, when it is determined that the number of the E-AGCH CCs is not one, in Step S205, the radio base station NodeB determines an E-AGCH CC having the smallest identification number, or an E-AGCH CC randomly selected as an E-AGCH CC to be assigned to the new mobile station UE, from among the E-AGCH CCs assigned to the fewest mobile stations.

### (Operations and Effects of the Mobile Communication System according to the First Embodiment of the Present Invention)

In the mobile communication system according to this embodiment, the system is configured to assign an E-AGCH CC assigned to a fewest mobile stations, to a new mobile station UE. Accordingly, E-AGCH CCs can be uniformly assigned to a plurality of mobile stations UE. This can solve such problems that a radio base station NodeB is not capable of transmitting via an E-AGCH using the specific E-AGCH CC to a mobile station UE which desires the E-AGCH using the specific E-AGCH CC, and ununiformity occurs in transmission frequencies in each of the E-AGCHs to the mobile stations UE.

### (A Mobile Communication System according to a Second Embodiment of the Present Invention)

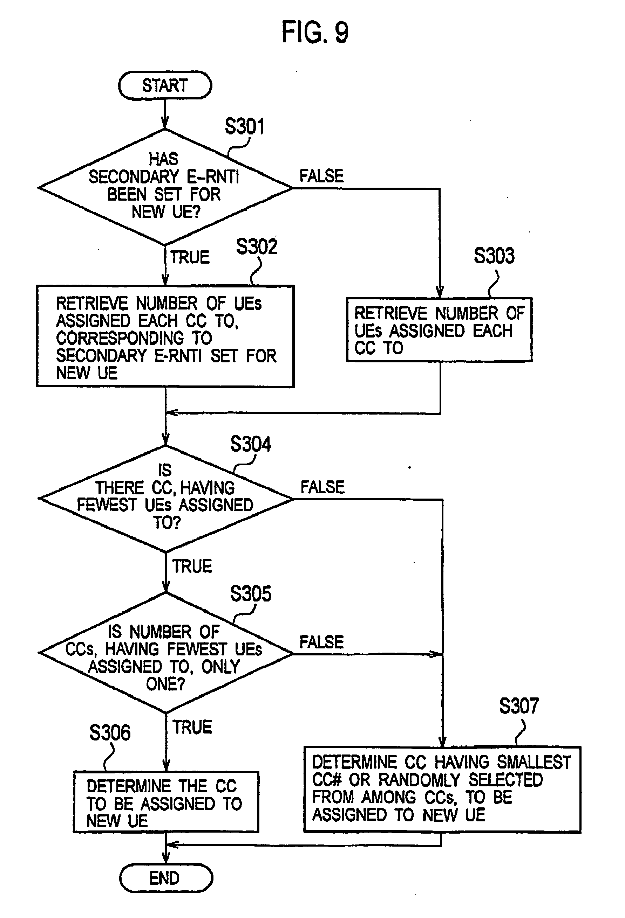

A mobile communication system according to a second embodiment of the present invention is described with reference to FIGs. 8 and 9. Description is given of the mobile communication system according to this embodiment, focused on the difference from the mobile communication system according to the first embodiment.

In the mobile communication system according to this embodiment, upon receipt of an EUL communication start request from a mobile station UE, the E-AGCH CC assignment unit 12 of the radio base station NodeB is configured to firstly select E-AGCH CCs corresponding to a group identifier (E-DCH radio network temporary identify: E-RNTI) of the mobile station UE from among a plurality of E-AGCH CCs specified by the radio network controller RNC and then to narrow down the selected E-AGCH CCs to an E-AGCH CC assigned to a fewest mobile stations.

As shown in FIG. 8, in the mobile communication system according to this embodiment, Primary E-RNTI is used as an individual identifier set for each mobile station UE, and Secondary E-RNTI is used as a group identifier set for each group including a plurality of mobile stations UE.

In an example of FIG. 8, E-AGCH CCs corresponding to Secondary E-RNTI #A are E-AGCH CC#0 and E-AGCH CC#1, and those corresponding to Secondary E-RNTI #B are E-AGCH CC#n-1 and E-AGCH CC#n.

Note that the E-AGCH CC assignment unit 12 is configured to manage a correspondence relationship between the E-AGCH CCs and Secondary E-RNTI.

Accordingly, upon receipt of an EUL communication start request from a mobile station UE for which Secondary E-RNTI #A is set, the E-AGCH CC assignment unit 12 is configured to select an E-AGCH CC assigned to a fewest mobile stations from the E-AGCH CC#0 and E-AGCH CC#1, as an E-AGCH CC to be assigned to the mobile station UE.

Further, upon receipt of an EUL communication start request from a mobile station UE in which Secondary E-RNTI #B is set, the E-AGCH CC assignment unit 12 is configured to select an E-AGCH CC assigned to the fewest mobile stations from the E-AGCH CC#n-1 and E-AGCH CC#n, as an E-AGCH CC to be assigned to the mobile station UE.

Operation of the mobile communication system according to this embodiment is described below. Since the overall operation of the mobile communication system according to this embodiment is the same as that of the first embodiment shown in FIG. 6, a method of determining an E-AGCH CC to be assigned to the new mobile station UE in Step S103 of FIG. 6 is described with reference to FIG. 6.

As shown in FIG. 9, in Step S301, upon receipt of an EUL communication start request from a new mobile station UE, the radio base station NodeB determines whether or not Secondary E-RNTI is set for the new mobile station UE.

When it is determined that Secondary E-RNTI is set for the new mobile station UE, the radio base station NodeB extracts E-AGCH CCs corresponding to the Secondary E-RNTI set for the new mobile station UE, from among a plurality of E-AGCH CCs specified by the radio network controller RNC, and then retrieves the number of mobile stations UE to which each of the thus extracted E-AGCH CCs is assigned, in Step S302.In subsequent steps in FIG. 9, non-extracted E-AGCH CCs are exempt from the assignment to the new mobile station UE.

Meanwhile, when it is determined that Secondary E-RNTI is not set for the new mobile station UE, the radio base station NodeB retrieves the number of mobile stations UE to which each of the plurality of E-AGCH CCs specified by the radio network controller RNC is assigned, in Step S303.

In Step S304, the radio base station NodeB determines whether or not an E-AGCH CC assigned to a fewest mobile stations is present.

When it is determined that the E-AGCH CC is present, the radio base station NodeB determines whether or not the number of such E-AGCH CCs is one, in Step S305.

When it is determined that the number of such E-AGCH CCs is one, the radio base station NodeB determines the E-AGCH CC as an E-AGCH CC assigned to the new mobile station UE, in Step S306.

Meanwhile, in Step S304, when it is determined that the E-AGCH CC assigned to a fewest mobile stations is not present, in Step S307, the radio base station NodeB determines, an E-AGCH CC having the smallest identification number, or an E-AGCH CC randomly selected as the E-AGCH CC to be assigned to the new mobile station UE, from among the plurality of E-AGCH CCs specified by the radio network controller RNC.

Further, in Step S305, when it is determined that the number of the E-AGCH CCs is not one, in Step S307, the radio base station NodeB determines an E-AGCH CC having the smallest identification number, or an E-AGCH CC randomly selected as an E-AGCH CC to be assigned to the new mobile station UE, from among the E-AGCH CCs assigned to a fewest mobile stations.

In the mobile communication system of this embodiment, the system is configured to select an E-AGCH CC assigned to a fewest mobile stations from among a plurality of E-AGCH CCs corresponding to an Secondary E-RNTI set for a new mobile station UE, and to assign the selected E-AGCH CC to the new mobile station UE. Accordingly, E-AGCH CCs can be uniformly assigned to a plurality of mobile stations UE belonging to the same Secondary E-RNTI. This can solve such problems that a radio base station NodeB is not capable of transmitting via an E-AGCH using the specific E-AGCH CC corresponding to the Secondary E-RNTI to a mobile station UE which desires the E-AGCH using the specific E-AGCH CC corresponding to the Secondary E-RNTI, and ununiformity occurs in transmission frequencies in each of the E-AGCHs to the mobile stations UE, and ununiformity occurs in transmission frequencies in each of the E-AGCHs to the mobile stations UE.

### (A Mobile Communication System according to a Third Embodiment of the Present Invention)

Description is given of a mobile communication system according to a third embodiment of the present invention, focused on the difference from the mobile communication system of the aforementioned first and second embodiments.

In this embodiment, upon receipt of an EUL communication start request from a mobile station UE, the E-AGCH CC assignment unit 12 of the radio base station NodeB is configured to select an E-AGCH CC (a transmission rate control channel channelization code) corresponding to an E-AGCH (transmission rate control channel) through which an AG (transmission rate) other than "Zero Grant" has been notified most frequently in a past predetermined period, from among a plurality of E-AGCH CCs (a plurality of transmission rate control channel channelization codes) specified by the radio network controller RNC.

For example, assume a case where in the past predetermined period, in an E-AGCH#1 corresponding to an E-AGCH CC#1, most of the time, "Zero Grant" has been notified, while in an E-AGCH#2 corresponding to an E-AGCH CC#2, most of the time, AGs other than "Zero Grant" have been notified. For this case, the E-AGCH CC assignment unit 12 is configured to select the E-AGCH CC#2.

Further, in a flowchart of FIG. 7, instead of the operation in Step S205, the E-AGCH CC assignment unit 12 may be configured to perform an operation of selecting an E-AGCH CC corresponding to an E-AGCH through which an AG other than "Zero Grant" has been notified most frequently in a past predetermined period from among a plurality of E-AGCH CCs specified by the radio network controller RNC.

Specifically, upon receipt of an EUL communication start request from the mobile station UE, the E-AGCH CC assignment unit 12 may be configured to perform the following operation. The E-AGCH CC assignment unit 12 selects an E-AGCH CC assigned to a fewest mobile stations from among the plurality of E-AGCH CCs specified by the radio network controller RNC. When selecting a plurality of E-AGCH CCs in this case, the E-AGCH CC assignment unit 12 selects an E-AGCH CC corresponding to an E-AGCH through which an AG other than "Zero Grant" has been notified most frequently in a past predetermined period, from among the thus selected E-AGCH CCs.

Further, in a flowchart of FIG. 9, the E-AGCH CC assignment unit 12 may be configured, instead of an operation of Step S307, to perform an operation of selecting an E-AGCH CC corresponding to an E-AGCH through which an AG other than "Zero Grant" has been notified most frequently in a past predetermined period, from among a plurality of E-AGCH CCs specified by the radio network controller RNC,

Specifically, from among the plurality of E-AGCH CCs specified by the radio network controller RNC, the E-AGCH CC assignment unit 12 may be configured to perform an operation of selecting E-AGCH CCs corresponding to a group identifier (E-DCH radio network temporary identity: E-RNTI) of the mobile station UE, and then narrowing down the selected E-AGCH CCs to an E-AGCH CC corresponding to an E-AGCH through an AG other than "Zero Grant" has been notified most frequently in a past predetermined period.

### (Modification 1 of the Present Invention)

Description is given of a mobile communication system according to a modification 1 of the present invention, focused on the difference from the mobile communication system of the aforementioned first and second embodiments.

In this modification 1, upon receipt of an EUL communication start request from a mobile station UE, the E-AGCH CC assignment unit 12 of the radio base station NodeB is configured to select an E-AGCH CC assigned to a fewest mobile stations in a unit time, from among a plurality of E-AGCH CCs (a plurality of transmission rate control channel channelization codes) specified by the radio network controller RNC.

In a mobile communication system to which an EUL scheme is applied, two types of Transmission Time Intervals (TTIs), that is, 2 ms and 10 ms, are applicable.

When a TTI of 2 ms and a TTI of 10 ms mixedly exist, as in the mobile communication systems of the first and second embodiments, the E-AGCH CC assignment unit 12 of the radio base station NodeB is configured to select an E-AGCH CC assigned to a fewest mobile stations without considering the TTI length, from among the plurality of E-AGCH CCs specified by the radio network controller RNC, and thereby to distribute the mobile stations UE to each of the E-AGCH CCs uniformly.

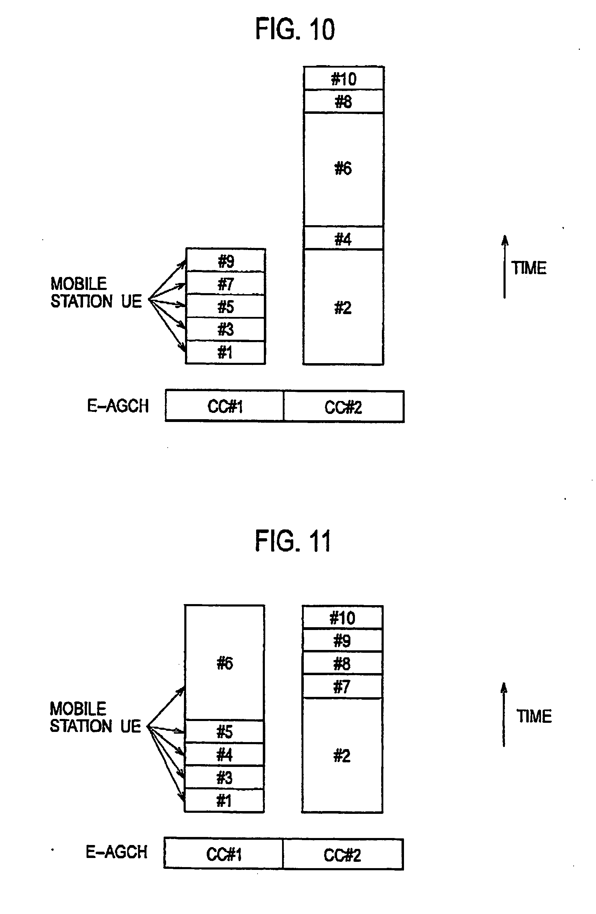

In this case, since occupancy time of an E-AGCH CC by a call having a TTI of 10 ms is five times longer than that of an E-AGCH CC by a call having a TTI of 2 ms, ununiformity might occur in a transmission frequency in the E-AGCH corresponding to each E-AGCH CC, as shown in FIG. 10.

Accordingly, upon receipt of the EUL communication start request from the mobile station UE, the E-AGCH CC assignment unit 12 of the radio base station NodeB is configured to select an E-AGCH CC assigned to a fewest mobile stations in a unit time, from among the plurality of E-AGCH CCs specified by the radio network controller RNC, as shown in FIG. 11.

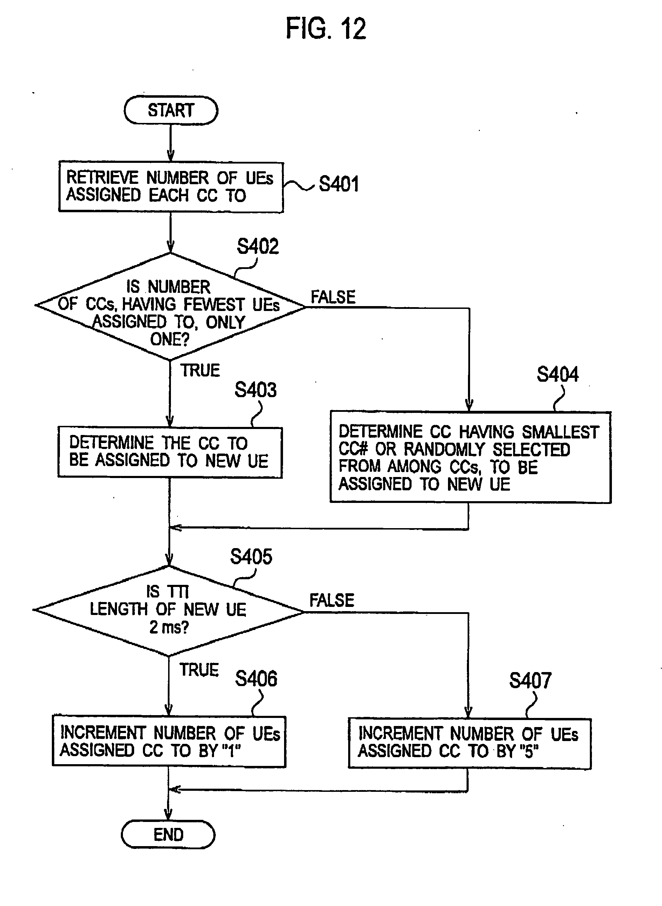

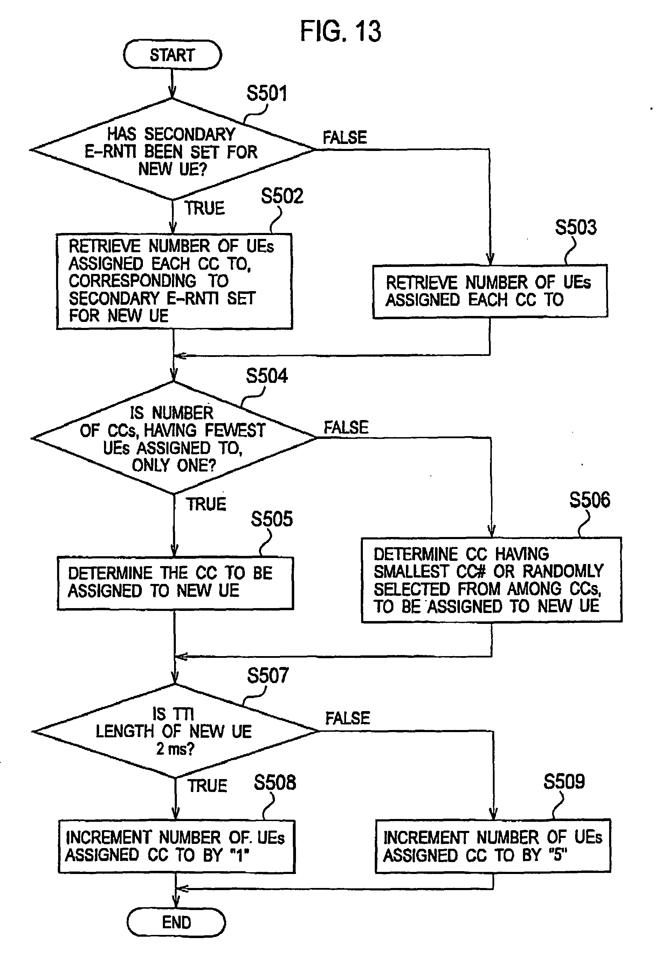

Operation of the mobile communication system according to this modification 1 is described below with reference to FIGs. 12 and 13. The overall operation of this modification 1 is the same as that of the first embodiment shown in FIG. 6.

First, with reference to FIG. 12, description is given of a method of determining an E-AGCH CC to be assigned to the new mobile station UE in Step S103 of FIG. 6 (corresponding to the first embodiment).

As shown in FIG. 12, in Step S401, the radio base station NodeB retrieves the number of mobile stations UE to which each one of a plurality of E-AGCH CCs specified by the radio network controller RNC is assigned.

In Step S402, the radio base station NodeB determines whether or not the number of E-AGCH CCs assigned to a fewest mobile stations is only one.

When it is determined that the number of such E-AGCH CCs is only one, the radio base station NodeB determines the E-AGCH CC, in Step S403, as an E-AGCH CC to be assigned to the new mobile station UE.

Meanwhile, in Step S402, when it is determined that the number of the E-AGCH CCs is not one, in Step S404, the radio base station NodeB determines an E-AGCH CC having the smallest identification number, or an E-AGCH CC randomly selected as an E-AGCH CC to be assigned to the new mobile station UE, from among the plurality of E-AGCH CCs specified by the radio network controller RNC or from among the E-AGCH CCs assigned to the fewest mobile stations.

In Step S405, the radio base station NodeB determines whether or not a TTI applied to the new mobile station UE is 2 ms.

When it is determined that the TTI is 2 ms, in Step S406, the number of UEs assigned the E-AGCH CC selected in Step S403 or Step S404 is incremented by "1".

By contrast, when it is determined that the TTI is not 2 ms (that is, 10 ms), the number of UEs assigned the E-AGCH CC selected in Step S403 or Step S404 is incremented by "5" in Step S407 (that is, a quotient obtained by dividing a TTI (10 ms) applied to the new mobile station UE by a reference TTI (2 ms)).

Second, with reference to FIG. 13, description is given of a method of determining an E-AGCH CC to be assigned to the new mobile station UE in Step S103 of FIG. 6 (corresponding to the second embodiment).

As shown in FIG. 13, upon receipt of an EUL communication start request from a new mobile station UE, the radio base station NodeB determines whether or not a Secondary E-RNTI has been set for the new mobile station UE, in Step S501.

When it is determined that Secondary E-RNTI has been set for the new mobile station UE, the radio base station NodeB extracts E-AGCH CCs corresponding to the Secondary E-RNTI set for the new mobile station UE, from among the plurality of E-AGCH CCs specified by the radio network controller RNC, and then retrieves the number of mobile stations UE to each one of the thus extracted E-AGCH CCs is assigned, in Step S502. In subsequent steps in FIG. 13, non-extracted E-AGCH CCs are exempt from the assignment to the new mobile station UE.

By contrast, when it is determined that Secondary E-RNTI has not been set for the new mobile station UE, the radio base station NodeB retrieves the number of mobile stations UE assigned to each one of the plurality of E-AGCH CCs specified by the radio network controller RNC, in Step S503.

In Step S504, the radio base station NodeB determines whether or not the number of E-AGCH CCs assigned to the fewest mobile stations is only one.

When it is determined that the number of such E-AGCH CCs is only one, the radio base station NodeB determines the E-AGCH CC as an E-AGCH CC to be assigned to the new mobile station UE, in Step S505.

Meanwhile, in Step S504, when it is determined that the number of the E-AGCH CCs is not one, in Step S506, the radio base station NodeB determines an E-AGCH CC having the smallest identification number or an E-AGCH CC randomly selected as an E-AGCH CC to be assigned to the new mobile station UE, from among the plurality of E-AGCH CCs specified by the radio network controller RNC or from among the E-AGCH CCs assigned to a fewest mobile stations.

In Step S507, the radio base station NodeB determines whether or not a TTI applied to the new mobile station UE is 2 ms.

When it is determined that the TTI is 2 ms, the number of UEs assigned the E-AGCH CC selected in Step S505 or Step S506 is incremented by "1," in Step S508

By contrast, when it is determined that the TTI is not 2 ms (that is, 10 ms), the number of UEs assigned the E-AGCH CC selected in Step S505 or Step S506 is incremented by "5" in Step S509 (that is, a quotient obtained by dividing a TTI (10 ms) applied to the new mobile station UE by a reference TTI (2 ms)).

According to the mobile communication system of this modification 1, even when mobile station UEs by using different TTIs mixedly exist, it is possible to reduce ununiformity in a transmission frequency in the E-AGCH corresponding to each E-AGCH CC, so that an effective use of code resource can be achieved.

Note that the performances of the above-mentioned mobile station UE, the radio base station NodeB and the radio network controller RNC may be implemented by hardware, by a software module executed by a processor, or by a combination of the two.

The software module may be provided in a storage medium of any form such as a RAM (Random Access Memory), a flash memory, a ROM (Read Only Memory), an EPROM(Erasable Programmable ROM), an EEPROM(Electronically Erasable and Programmable ROM), a register, a hard disk, a removable disk, and a CD-ROM.

The storage medium is connected to a processor so that the processor can read and write information from and to the storage medium. The storage medium may otherwise be integrated in a processor. The storage medium and the processor may be provided within an ASIC, and the ASIC may be provided in a mobile station UE, a radio base station NodeB and a radio network controller RNC. Otherwise, the storage medium and the processor may be provided in each of a mobile station UE, a radio base station NodeB and a radio network controller RNC as discrete components.

Hereinabove, the present invention has been described in detail by use of the embodiment. However, it is obvious to those skilled in the art that the present invention is not limited to the embodiment described herein. The present invention may be implemented as a modification and a variation, within the scope of the present invention defined by the scope of claims. Accordingly, the present specification aims to provide an exemplary description and does not limit the present invention in any way.

## Claims

1. A mobile communication method by which a mobile station (S102) transmits uplink user data by using a transmission rate notified by a radio base station (S101) via a transmission rate control channel, the method comprising:
A: causing a radio network controller to specify a plurality of transmission rate control channel channelization codes assignable to the mobile station, for the radio base station;
B: causing the radio base station (S101) to select a transmission rate control channel channelization code (S103) assigned to a lowest number of mobile stations, upon receipt of a communication start request from the mobile station, from among the plurality of transmission rate control channel channelization codes specified in the A;
C: causing the radio base station (S101) to assign the transmission rate control channel channelization code (S103) selected in the B to the mobile Station; and
D: causing the mobile station (S102) to transmit the uplink user data by using the transmission rate notified via the transmission rate control channel corresponding to the transmission rate control channel channelization code assigned in the C (S106).

2. The mobile communication method according to claim 1, wherein in the B, the radio base station (S101) selects the transmission rate control channel channelization code (S103) assigned to the lowest number of mobile stations in a unit time, upon receipt of the communication start request from the mobile station, from among the plurality of transmission rate control channel channelization codes specified in the A.

3. The mobile communication method according to claim 1, wherein causing the radio base station (S101) to select a transmission rate control channel channelization code (S103) comprises causing the radio base station (S101) to select a transmission rate control channel channelization code (S103) corresponding to the transmission rate control channel through which the transmission rate has been notified most frequently in a past predetermined period.

4. A mobile communication system in which a mobile station (S102) is configured to transmit uplink user data by using a transmission rate notified by a radio base station (S101) via a transmission rate control channel, the system comprising:
a radio network controller configured to specify a plurality of transmission rate control channel channelization codes assignable to the mobile station, for the radio base station, wherein
the radio base station (S101) is configured to select a transmission rate control channel channelization code (S103) assigned to a lowest number of mobile stations, upon receipt of a communication start request from the mobile station, from among the final version, plurality of transmission rate control channel channelization codes specified by the radio network controller, and then to assign a selected transmission rate control channel channelization code (S103) to the mobile station, and
the mobile station (S102) is configured to transmit the uplink user data by using the transmission rate notified via the transmission rate control channel corresponding to the selected transmission rate control channel channelization code (S103) assigned by the radio base station.

5. The mobile communication system according to claim 4, wherein the radio base station (S101) is configured to select the transmission rate control channel channelization code (S103) assigned to the lowest number of mobile stations, from transmission rate control channel channelization codes corresponding to a group identifier of the mobile station, among the plurality of transmission rate control channel channelization codes specified by the radio network controller,

6. The mobile communication system according to claim 4, wherein when a plurality of the transmission rate control channel channelization codes are selected, the radio base station (S101) is configured to assign a transmission rate control channel channelization code (S103) having a smallest identification number in a plurality of selected transmission rate control channel channelization codes to the mobile station.

7. The mobile communication system according to claim 4, wherein the radio base station (S101) is configured to select the transmission rate control channel channelization code (S103) assigned to the lowest number of mobile stations in a unit time, upon receipt of the communication start request from the mobile station, from among the plurality of transmission rate control channel channelization codes specified by the radio network controller, and then assigns the selected transmission rate control channel channelization code (S103) to the mobile station.

8. A radio base station (S101) used in a mobile communication system in which a mobile station (S102) transmits uplink user data by using a transmission rate notified by the radio base station (S101) via a transmission rate control channel, the radio base station (S101) comprising:
an assignment unit configured to select a transmission rate control channel channelization code (S103) assigned to a lowest number of mobile stations, upon receipt of a communication start request from the mobile station, from among a plurality of transmission rate control channel channelization codes specified by a radio network controller, and then to assign a selected transmission rate control channel channelization code (S103) to the mobile station.

9. The radio base station (S101) according to claim 8, wherein the assignment unit is configured to select the transmission rate control channel channelization code (S103) assigned to the lowest number of mobile stations, from transmission rate control channel channelization codes corresponding to a group identifier of the mobile station, among the plurality of transmission rate control channel channelization codes specified by the radio network controller.

10. The radio base station (S101) according to claim 8, wherein when a plurality of the transmission rate control channel channelization codes are selected, the assignment unit is configured to assign a transmission rate control channel channelization code (S103) having a smallest identification number in a plurality of selected transmission rate control channel channelization codes, to the mobile station.

11. The radio base station (S101) according to claim 8, wherein
the assignment unit is further configured to select a transmission rate control channel channelization code (S103) corresponding to the transmission rate control channel through which the transmission rate has been notified most frequently in a past predetermined period.

12. The radio base station (S101) according claim 8, wherein the assignment unit is configured to select the transmission rate control channel channelization code (S103) assigned to the lowest number of mobile stations in a unit time, upon receipt of the communication start request from the mobile station, from among the plurality of transmission rate control channel channelization codes specified by the radio network controller, and then assigns the selected transmission rate control channel channelization code (S103) to the mobile station.

## Patentansprüche

1. Mobilkommunikationsverfahren, durch welches eine Mobilstation (S102) Uplink-Nutzerdaten überträgt, unter Verwendung einer Übertragungsrate, die durch eine Funkbasisstation (S01) über einen Übertragungsraten-Steuerkanal mitgeteilt wird, wobei das Verfahren die Schritte umfasst:
A: Veranlassen einer Funknetzwerksteuereinheit, eine Vielzahl von Übertragungsraten-Steuerkanal-Kanalisierungscodes zu bestimmen, die der Mobilstation zugewiesen werden können, für die Funkbasisstation;
B: Veranlassen der Funkbasisstation (S101), einen Übertragungsraten-Steuerkanal-Kanalisierungscode (S103) auszuwählen, der einer niedrigsten Anzahl von Mobilstationen zugewiesen ist, nach Empfang einer Kommunikationsstart-Anforderung von der Mobilstation, unter der Vielzahl von in Schritt A bestimmten Übertragungsraten-Steuerkanal-Kanalisierungscodes;
C: Veranlassen der Funkbasisstation (S101), den im Schritt B ausgewählten Übertragungsraten-Steuerkanal-Kanalisierungscode (S103) der Mobilstation zuzuweisen; und
D: Veranlassen der Mobilstation (S102), die Uplink-Nutzerdaten zu übertragen, unter Verwendung der über den Übertragungsraten-Steuerkanal, der mit dem in Schritt C zugewiesenen Übertragungsraten-Steuerkanal-Kanalisierungscode zusammenhängt (S106), mitgeteilten Übertragungsrate.

2. Mobilkommunikationsverfahren nach Anspruch 1, wobei in dem Schritt B die Funkbasisstation (S101) unter der Vielzahl von im Schritt A bestimmten Übertragungsraten-Steuerkanal-Kanalisierungscodes den Übertragungsraten-Steuerkanal-Kanalisierungscode (S103) auswählt, der der niedrigsten Anzahl von Mobilstationen in einer Einheitszeit zugewiesen ist.

3. Mobilkommunikationsverfahren nach Anspruch 1, wobei das Veranlassen der Funkbasisstation (S101) zur Auswahl eines Übertragungsraten-Steuerkanal-Kanalisierungscodes (S103) ein Veranlassen der Funkbasisstation (S101) umfasst zum Auswählen eines Übertragungsraten-Steuerkanal-Kanalisierungscodes (S103), der mit dem Übertragungsraten-Steuerkanal zusammenhängt, über den die Übertragungsrate in einem vergangenen vorbestimmten Intervall am öftesten mitgeteilt wurde.

4. Mobilkommunikationssystem, in dem eine Mobilstation (S102) konfiguriert ist zur Übertragung von Uplink-Nutzerdaten, unter Verwendung einer durch eine Funkbasisstation (S101) über einen Übertragungsraten-Steuerkanal mitgeteilte Übertragungsrate, wobei das System umfasst:
eine Funknetzwerk-Steuereinheit, konfiguriert zum Bestimmen einer Vielzahl von Übertragungsraten-Steuerkanal-Kanalisierungscodes, die Mobilstationen zugewiesen werden können, für die Funkbasisstation, wobei
die Funkbasisstation (S101) konfiguriert ist zum Auswählen eines Übertragungsraten-Steuerkanal-Kanalisierungscodes (S103), der einer niedrigsten Anzahl von Mobilstationen zugewiesen ist, nach Empfang einer Kommunikationsstart-Anforderung von der Mobilstation, von, unter der Endversion, einer Vielzahl von durch die Funknetzwerk-Steuereinheit bestimmten Übertragungsraten-Steuerkanal-Kanalisierungscodes, und dann zum Zuweisen eines Übertragungsraten-Steuerkanal-Kanalisierungscodes (S103) zu der Mobilstation, und
die Mobilstation (S102) konfiguriert ist zur Übertragung der Uplink-Nutzerdaten, unter Verwendung der über den Übertragungsraten-Steuerkanal mitgeteilten Übertragungsrate, die mit dem ausgewählten, der Funkbasisstation zugewiesenen Übertragungsraten-Steuerkanal-Kanalisierungscode (S103) zusammenhängt.

5. Mobilkommunikationssystem nach Anspruch 4, wobei die Funkbasisstation (S101) konfiguriert ist zum Auswählen des Übertragungsraten-Steuerkanal-Kanalisierungscodes (S103), der der niedrigsten Anzahl von Mobilstationen zugewiesen ist, aus Übertragungsraten-Steuerkanal-Kanalisierungscodes, die mit einem Gruppen-Identifikator der Mobilstation zusammenhängen, unter der Vielzahl von Übertragungsraten-Steuerkanal-Kanalisierungscodes, die durch die Funknetzwerk-Steuereinheit bestimmt sind.

6. Mobilkommunikationssystem nach Anspruch 4, wobei, wenn eine Vielzahl von Übertragungsraten-Steuerkanal-Kanalisierungscodes ausgewählt werden, die Funkbasisstation (S101) konfiguriert ist, einen Übertragungsraten-Steuerkanal-Kanalisierungscode (S103) mit einer kleinsten Identifikationsnummer in einer Vielzahl von für die Mobilstation ausgewählten Übertragungsraten-Steuerkanal-Kanalisierungscodes zuzuweisen.

7. Mobilkommunikationssystem nach Anspruch 4, wobei die Funkbasisstation (S101) konfiguriert ist zum Auswählen des Übertragungsraten-Steuerkanal-Kanalisierungscodes (S103), welcher der niedrigsten Anzahl von Mobilstationen in einer Einheitszeit zugewiesen ist, nach Empfang der Kommunikationsstart-Anforderung von der Mobilstation, unter der Vielzahl von durch die Funknetzwerk-Steuereinheit bestimmter Übertragungsraten-Steuerkanal-Kanalisierungscodes, und dann zum Zuweisen des ausgewählten Übertragungsraten-Steuerkanal-Kanalisierungscodes (S103) an die Mobilstation.

8. Funkbasisstation (S101), verwendet in einem Mobilkommunikationssystem, in dem eine Mobilstation (S102) Uplink-Nutzerdaten überträgt, unter Verwendung einer Übertragungsrate, die durch die Funkbasisstation (S101) über einen Übertragungsraten-Steuerkanal mitgeteilt wurde, wobei die Funkbasisstation (S101) umfasst:
eine Zuweisungseinheit, konfiguriert zum Auswählen eines einer niedrigsten Anzahl von Mobilstationen zugewiesenen Übertragungsraten-Steuerkanal-Kanalisierungscodes (S103), nach Empfang einer Kommunikationsstart-Anforderung von der Mobilstation, unter einer Vielzahl von durch eine Funknetzwerk-Steuereinheit bestimmten Übertragungsraten-Steuerkanal-Kanalisierungscodes, und dann zum Zuweisen eines ausgewählten Übertragungsraten-Steuerkanal-Kanalisierungscodes (S103) an die Mobilstation.

9. Funkbasisstation (S101) nach Anspruch 8, wobei die Zuweisungseinheit konfiguriert ist zum Auswählen des der niedrigsten Anzahl von Mobilstationen zugewiesenen Übertragungsraten-Steuerkanal-Kanalisierungscodes (S103) aus Übertragungsraten-Steuerkanal-Kanalisierungscodes, die mit einem Gruppen-Identifikator der Mobilstation zusammenhängen, unter der Vielzahl von Übertragungsraten-Steuerkanal-Kanalisierungscodes, die durch die Funknetzwerk-Steuereinheit bestimmt sind.

10. Funkbasisstation (S101) nach Anspruch 8, wobei, wenn eine Vielzahl der Übertragungsraten-Steuerkanal-Kanalisierungscodes ausgewählt werden, die Zuweisungseinheit konfiguriert ist, einen Übertragungsraten-Steuerkanal-Kanalisierungscode (S103) mit einer kleinsten Identifikationsnummer in einer Vielzahl von ausgewählten Übertragungsraten-Steuerkanal-Kanalisierungscodes der Mobilstation zuzuweisen.

11. Funkbasisstation (S101) nach Anspruch 8, wobei die Zuweisungseinheit ferner konfiguriert ist, einen Übertragungsraten-Steuerkanal-Kanalisierungscode (S103) auszuwählen, der mit dem Übertragungsraten-Steuerkanal zusammenhängt, über den die Übertragungsrate in einem vergangenen vorbestimmten Intervall am öftesten mitgeteilt wurde.

12. Funkbasisstation (S101) nach Anspruch 8, wobei die Zuweisungseinheit konfiguriert ist zum Auswählen des Übertragungsraten-Steuerkanal-Kanalisierungscodes (S103), der der niedrigsten Anzahl von Mobilstationen in einer Einheitszeit zugewiesen ist, nach Empfang der Kommunikationsstart-Anforderung von der Mobilstation, aus der Vielzahl von durch die Funknetzwerk-Steuereinheit bestimmten Übertragungsraten-Steuerkanal-Kanalisierungscodes, und dann zum Zuweisen des ausgewählten Übertragungsraten-Steuerkanal-Kanalisierungscodes (S103) an die Mobilstation.

## Revendications

1. Procédé de communication mobile par lequel une station mobile (S102) transmet des données d'utilisateur en liaison montante en utilisant un débit de transmission notifié par une station radio de base (S101) par l'intermédiaire d'un canal de commande de débit de transmission, le procédé comprenant :
A : le fait d'amener une unité de commande de réseau radio à spécifier une pluralité de codes de découpage en canaux de canal de commande de débit de transmission pouvant être attribués à la station mobile, pour la station radio de base ;
B : le fait d'amener la station radio de base (S101) à sélectionner un code de découpage en canaux de canal de commande de débit de transmission (S103) attribué à un nombre le plus petit de stations mobiles, lors de la réception d'une demande de début de communication en provenance de la station mobile, parmi la pluralité de codes de découpage en canaux de canal de commande de débit de transmission spécifiés en A ;
C : le fait d'amener la station radio de base (S101) à attribuer à la Station mobile le code de découpage en canaux de canal de commande de débit de transmission (S103) sélectionné en B ; et
D : le fait d'amener la station mobile (S102) à transmettre les données d'utilisateur en liaison montante en utilisant le débit de transmission notifié par l'intermédiaire du canal de commande de débit de transmission correspondant au code de découpage en canaux de canal de commande de débit de transmission attribué en C (S106).

2. Procédé de communication mobile selon la revendication 1, dans lequel, en B, la station radio de base (S101) sélectionne le code de découpage en canaux de canal de commande de débit de transmission (S103) attribué au nombre le plus petit de stations mobiles en un temps unitaire, lors de la réception de la demande de début de communication en provenance de la station mobile, parmi la pluralité de codes de découpage en canaux de canal de commande de débit de transmission spécifiés en A.

3. Procédé de communication mobile selon la revendication 1, dans lequel le fait d'amener la station radio de base (S101) à sélectionner un code de découpage en canaux de canal de commande de débit de transmission (S103) comprend le fait d'amener la station radio de base (S101) à sélectionner un code de découpage en canaux de canal de commande de débit de transmission (S103) correspondant au canal de commande de débit de transmission par l'intermédiaire duquel le débit de transmission a été notifié le plus fréquemment dans une période prédéterminée passée.

4. Système de communication mobile dans lequel une station mobile (S102) est configurée pour transmettre des données d'utilisateur de liaison montante en utilisant un débit de transmission notifié par une station radio de base (S101) par l'intermédiaire d'un canal de commande de débit de transmission, le système comprenant :
une unité de commande de réseau radio configurée pour spécifier une pluralité de codes de découpage en canaux de canal de commande de débit de transmission pouvant être attribués à la station mobile, pour la station radio de base, dans lequel
la station radio de base (S101) est configurée pour sélectionner un code de découpage en canaux de canal de commande de débit de transmission (S103) attribué à un nombre le plus petit de stations mobiles, lors de la réception d'une demande de début de communication en provenance de la station mobile, parmi la version finale, une pluralité de codes de découpage en canaux de canal de commande de débit de transmission spécifiée par l'unité de commande de réseau radio, et ensuite pour attribuer à la station mobile un code de découpage en canaux de canal de commande de débit de transmission (S103) sélectionné, et
la station mobile (S102) est configurée pour transmettre les données d'utilisateur en liaison montante en utilisant le débit de transmission notifié par l'intermédiaire du canal de commande de débit de transmission correspondant au code de découpage en canaux de canal de commande de débit de transmission (S103) sélectionné attribué par la station radio de base.

5. Système de communication mobile selon la revendication 4, dans lequel la station radio de base (S101) est configurée pour sélectionner le code (S103) de découpage en canaux de canal de commande de débit de transmission attribué au nombre le plus petit de stations mobiles, à partir de codes de découpage en canaux de canal de commande de débit de transmission correspondant à un identificateur de groupe de la station mobile, parmi la pluralité de codes de découpage en canaux de canal de commande de débit de transmission spécifiée par l'unité de commande de réseau radio.

6. Système de communication mobile selon la revendication 4, dans lequel, quand une pluralité des codes de découpage en canaux de canal de commande de débit de transmission est sélectionnée, la station radio de base (S101) est configurée pour attribuer à la station mobile un code de découpage en canaux de canal de commande de débit de transmission (S103) ayant un numéro d'identification le plus petit dans une pluralité de codes de découpage en canaux de canal de commande de débit de transmission sélectionnée.

7. Système de communication mobile selon la revendication 4, dans lequel la station radio de base (S101) est configurée pour sélectionner le code de découpage en canaux de canal de commande de débit de transmission (S103) attribué au nombre le plus petit de stations mobiles en un temps unitaire, lors de la réception de la demande de début de communication en provenance de la station mobile, parmi la pluralité de codes de découpage en canaux de canal de commande de débit de transmission spécifiée par l'unité de commande de radiodiffusion, et attribue ensuite à la station mobile le code de découpage en canaux de canal de commande de débit de transmission (S103) sélectionné.

8. Station radio de base (S101) utilisée dans un système de communication mobile dans lequel une station mobile (S102) transmet des données d'utilisateur en liaison montante en utilisant un débit de transmission notifié par la station radio de base (S101) par l'intermédiaire d'un canal de commande de débit de transmission, la station radio de base (S101) comprenant :
une unité d'attribution configurée pour sélectionner un code (S103) de découpage en canaux de canal de commande de débit de transmission attribué à un nombre le plus petit de stations mobiles, lors de la réception d'une demande de début de communication en provenance de la station mobile, parmi une pluralité de codes de découpage en canaux de canal de commande de débit de transmission spécifiée par une unité de commande de réseau radio, et ensuite pour attribuer à la station mobile un code de découpage en canaux de canal de commande de débit de transmission (S103) sélectionné.

9. Station radio de base (S101) selon la revendication 8, dans laquelle l'unité d'attribution est configurée pour sélectionner le code de découpage en canaux de canal de commande de débit de transmission (S103) attribué au nombre le plus petit de stations mobiles, à partir de codes de découpage en canaux de canal de commande de débit de transmission correspondant à un identificateur de groupe de la station mobile, parmi la pluralité de codes de découpage en canaux de canal de commande de débit de transmission spécifiée par l'unité de commande de radiodiffusion.

10. Station radio de base (S101) selon la revendication 8, dans laquelle, quand une pluralité des codes de découpage en canaux de canal de commande de débit de transmission est sélectionnée, l'unité d'attribution est configurée pour attribuer à la station mobile un code de découpage en canaux de canal de commande de débit de transmission (S103) ayant un numéro d'identification le plus petit dans une pluralité de codes de découpage en canaux de canal de commande de débit de transmission sélectionnée.

11. Station radio de base (S101) selon la revendication 8, dans laquelle
l'unité d'attribution est en outre configurée pour sélectionner un code de découpage en canaux de canal de commande de débit de transmission (S103) correspondant au canal de commande de débit de transmission par l'intermédiaire duquel le débit de transmission a été notifié le plus fréquemment dans une période prédéterminée passée.

12. Station radio de base (S101) selon la revendication 8, dans laquelle l'unité d'attribution est configurée pour sélectionner le code de découpage en canaux de canal de commande de débit de transmission (S103) attribué au nombre le plus petit de stations mobiles dans un temps unitaire, lors de la réception de la demande de début de communication en provenance de la station mobile, parmi la pluralité de codes de découpage en canaux de canal de commande de débit de transmission spécifiés par l'unité de commande de réseau radio, et attribue ensuite à la station mobile le code de découpage en canaux de canal de commande de débit de transmission (S103) sélectionné.
